# EUROPEAN PATENT APPLICATION

(11) **EP 4 539 516 A1**
(43) Date of publication of application: **16.04.2025**
(21) Application number: 23203409.0
(22) Date of filing: 13.10.2023
(51) Int. Cl.: H04W 4/80

(54) **BUILDING INFRASTRUCTURE DEVICE, SYSTEM COMPRISING SUCH DEVICE AND METHOD FOR COMMISSIONING SUCH DEVICE**

(71) Applicant: Zumtobel Lighting GmbH, 6850 Dornbirn (AT)
(72) Inventor: HEIM, Andreas, 6851 Dornbirn (AT)
(74) Representative: Beder, Jens

(57) **Abstract**

The present invention provides a building infrastructure device (100). The device comprises a housing (101), and a near field communication (NFC) interface (102) arranged in or on the housing (101). The device (100) is configured to electrically power the NFC interface (102) when the device (100) is electrically supplied from an electrical energy supply (400). The NFC interface (102) is configured to be in a mode in response to being electrically supplied by the device (100). In the mode the NFC interface (102) is configured to wirelessly transmit to an external NFC tag information (200) in response to the NFC tag (200) being brought in a vicinity of the device (100), the information being information for establishing a wireless communication with the device (100). The present invention provides a system comprising such a building infrastructure device and a method for commissioning such a building infrastructure device.

## Description

The present invention relates to a building infrastructure device; a system comprising such a building structure device; and a method for commissioning such a building infrastructure device. The term "provisioning" may be used as a synonym for the term "commissioning".

In a building different building infrastructure devices may be installed for providing different functions in the building, such as lighting, safety features, heating and/or cooling etc. Examples of building infrastructure devices comprise lighting devices, such as luminaires or lighting means; sensor devices, such as motion and/or presence sensors, light sensors, cameras (e.g. surveillance camera) etc.; actuator devices, such as electric motors for blinds; loudspeakers; microphones; alarm devices; heating and/or cooling devices, such air-conditioner, heaters etc.; air cleaning devices; humidifier devices etc.

Such devices may be integrated in a network for communicating with each other (e.g. sharing information with each other) and/or being controlled. This network may be referred to as a smart home network. In order for devices being newly installed in a building to be part of a network of the building, the devices need to be commissioned. That is, the devices need to be integrated in the network. Thus, a device to be integrated in a network (e.g. smart home network) of a building, e.g. a part of the building or the entire building, comprises information for establishing a wireless communication with the device. For example, a commissioning device may use such information for establishing a wireless communication with the building infrastructure device. Then the commissioning device may commission, via the established wireless communication, the building infrastructure device. This allows the building infrastructure device being integrated in the network of a building or a part of the building.

The building infrastructure device may store the information for establishing a wireless communication with the device in the form of a near field communication (NFC) tag, a QR-code or a text string arranged on the housing of the device. The aforementioned forms of storing at the device the information for establishing a wireless communication with the device all require that this information is obtained directly at the device. For example, in case of using a NFC tag at the device for storing the information at the device, a NFC reader needs to be brought close to the NFC tag and, thus, close to the device. This may be difficult when the device is already installed. For example, in work scenarios (such as offices, factories etc.) building infrastructure devices, such as luminaires, may be installed in areas with high ceilings. Thus, once installed the devices cannot be easily reached by a person. That is, a person performing the commissioning of the devices with a commissioning device needs to use a ladder, or, e.g. in the case of a high ceiling in halls, an aerial platform is needed. This increases working hours, requires additional equipment and increases a risk of accidents for commissioning the devices.

Therefore, it is an object of the present invention to provide a building infrastructure device that is improved with regard to commissioning. It is in particular an object of the present invention to provide a building infrastructure device that allows overcoming at least one of the above drawbacks with regard to commissioning.

These and other objects, which become apparent upon reading the following description, are solved by the subject matter of the independent claim. The dependent claims refer to preferred embodiments of the invention.

According to a first aspect of the invention, a building infrastructure device is provided. The building infrastructure device comprises a housing, and a near field communication (NFC) interface arranged in or on the housing. The device is configured to electrically supply the NFC interface when the device is electrically supplied from an electrical energy supply. The NFC interface is configured to be in a mode in response to being electrically supplied by the device. In the mode the NFC interface is configured to wirelessly transmit to an external NFC tag information in response to the external NFC tag being brought in a vicinity of the device, the information being information for establishing a wireless communication with the device.

In other words, the first aspect of the present invention proposes including an NFC interface in a building infrastructure device, which is configured to wirelessly write the information for establishing a wireless communication with the device to a NFC tag being brought in the vicinity of the building infrastructure device. Bringing a NFC tag in the vicinity of the housing of the building infrastructure device may be easier achieved with regard to bringing a NFC reader in the vicinity of the housing when the device is installed at a high ceiling of a room. Namely, the NFC tag is of a much smaller size, less weight and does not need to be operated by a person for obtaining the information from the NFC interface of the building infrastructure device. It is sufficient to bring the NFC tag to the vicinity of the housing and, thus, the NFC interface of the building infrastructure device. This may be easily achieved by arranging the NFC tag at a rod and using the rod to bring the NFC tag in the vicinity of the housing of the building infrastructure device, e.g. when the device is installed at a ceiling. The information provided from the NFC interface of the building infrastructure device to the NFC tag may then be read in (i.e. obtained) by a commissioning device, which may use the information to establish a wireless communication, such as a Bluetooth communication, with the building infrastructure device for integrating the device in a network and, thus, commissioning the device.

Therefore, the device according to the first aspect allows commissioning itself without needing additional equipment, such as a ladder or aerial platform; with a reduced time (e.g. putting a rod with a NFC tag to the vicinity of the device is much faster than a person climbing up a ladder and operating a NFC reader for reading out a NFC tag), and with a reduced risk of accidents (ladders and aerial platform may be a source of accident and, thus, not using such equipment for commissioning reduces the risk of accidents).

For example, the building infrastructure device may be a lighting device, such as a luminaire or lighting means; a sensor device, such as motion and/or presence sensor, light sensor, camera (e.g. surveillance camera) etc.; an actuator device, such as an electric motor for blinds; a loudspeaker; a microphone; an alarm device; a heating and/or cooling device, such as an air-conditioner, a heater etc.; an air cleaning device; a humidifier devices etc.

The term "active NFC transmitter" may be used a synonym for the term "NFC interface". The NFC interface may comprise an antenna (may be referred to as NFC antenna) for wirelessly communicating, e.g. wireless transmitting the information to the NFC tag. The NFC interface may obtain the information for establishing a wireless communication with the device from a data storage of the device storing said information. The data storage may be part of the NFC interface or the NFC interface may be electrically connected to the data storage. The NFC interface may be implemented according to any means known in the art for wirelessly transmitting information to a NFC tag.

The device may be configured to electrically supply the NFC interface when the device is electrically connected to an external electrical energy supply, such as mains or an external electrical energy storage (such as a battery, optional a rechargeable battery). That is, the electrical energy supply may be an external energy supply. Alternatively or additionally, the device may comprise an electrical energy storage (such as a battery, optional rechargeable battery) arranged in or on the housing and the device may be configured to electrically supply the NFC interface when the electrical supply of the device from the electrical energy storage is activated, i.e. turned on. That is, the electrical energy supply may be an energy supply of the device. The device being configured to electrically supply the NFC interface means that the device is configured to provide sufficient electrical energy to the NFC interface so that the NFC interface may operate. For this, the device may comprise an electrical energy supply circuit. The electrical energy supply circuit may be configured to electrically supply the NFC interface when the device is electrically supplied from the electrical energy supply. The electrical energy supply circuit of the device may be configured to electrically supply other components of the device. For example, in case the device is a luminaire, the electrical energy supply circuit may be configured to electrically supply the NFC interface and a light source of the luminaire. The electrical energy supply circuit may be arranged in the housing of the device.

The NFC interface is configured to enter the mode as soon as the NFC interface is electrically supplied. The mode may be referred to as "write mode" or "push mode". In other words, in the mode the NFC interface may automatically write or push the information to the external NFC tag using wireless communication when the NFC tag is brought in the vicinity of the device. That is, the NFC interface is configured to store in the external NFC tag the information (for establishing a wireless communication with the device) in response to the external NFC tag being brought in a vicinity of the device. The mode of the NFC interface allows to automatically provide the information for establishing a communication with the device to the external NFC tag by bringing the external NFC tag near to the NFC interface.

The NFC interface may be arranged in the housing such that at least a part, such as an antenna part, of the NFC interface is direct towards the housing. Optionally, the NFC interface may be arranged in the housing such that at least a part, such as an antenna part, of the NFC interface is in contact with the housing or at least partly protrudes out of the housing. The NFC interface may be arranged on the housing such that the NFC interface is in contact with the housing.

The housing may be implemented according to any means known in the art such that it allows a wireless communication, i.e. NFC, between the NFC interface and the external NFC tag.

The passage "vicinity of the device" and "vicinity of the housing of the device" may be understood as synonyms. Bringing the external NFC tag to the vicinity of the device means bringing the external NFC tag to the vicinity of a location of the housing, where the NFC interface is arranged. For example, the external NFC tag may be in the vicinity of the device and, thus, of the NFC interface of the device, when a distance between the NFC interface and the external NFC tag is less than 10 cm, optionally less than 5 cm. In other words, in the mode the NFC interface is configured to wirelessly transmit to the external NFC tag the information in response to the external NFC tag being brought within a distance of the device (i.e. housing of the device) that allows near field communication (NFC) (i.e. wireless communication between the NFC interface and the external NFC tag).

The NFC interface may electrically supply the external NFC tag in response to the external NFC tag being brought in the vicinity of the device. That is, the external NFC does not need to comprise its own electrical energy supply. The term "passive NFC transmitter" may be used as a synonym for the term "NFC tag". The NFC tag may comprise an antenna (may be referred to as NFC antenna) for wirelessly communicating, e.g. wirelessly obtaining the information from the NFC interface of the device. The external NFC tag may comprise a data storage for storing said information. That is, the external NFC tag is configured to store the information transmitted from the NFC interface of the device. The external NFC tag, i.e. its data storage, may be configured such that a NFC reader may obtain or read information stored in the NFC tag, i.e. in its data storage. The external NFC tag may be implemented according to any means known in the art for wirelessly receiving and storing information, and being configured to be read by an NFC reader.

The information for establishing a wireless communication with the device may comprise information allowing an entity to find the device as a communication participant. Optionally, the information for establishing a wireless communication with the device may comprise information for establishing a secure communication link with the device, such as a security key. The information for establishing a wireless communication with the device may be information for establishing a Bluetooth communication with the device.

A mounting part of the housing may be configured to be mounted to an entity. Optionally, the entity is a wall or ceiling. That is, the mounting part of the housing may be configured to be mounted to a wall or ceiling. The NFC interface may be arranged in or on the housing at a part of the housing that is different to the mounting part of the housing.

This allows an external NFC tag to be brought close enough to the NFC interface for NFC when the NFC tag is brought in the vicinity of the device.

Optionally, the NFC interface is arranged in or on the housing at a part of the housing that is opposite to the mounting part of the housing.

For example, when the mounting part of the housing is a backside of the housing, then the NFC interface may be arranged in or on the housing at the front side of the housing. At the front side of the housing, the device may be configured to provide its function. For example, in case the device is a luminaire the front side may be the side of the housing where light is emitted; in case the device is a camera, the front side may be the side where the environment is being perceived; etc.

Optionally, the device comprises a light source arranged in the housing and configured to emit light via a light emitting surface of the housing. The NFC interface may be arranged in or on the housing such that the NFC interface is closer to the light emitting surface of the housing than to a surface of the housing that is opposite to the light emitting surface.

The NFC interface may be arranged in or on the housing such that it does not shield a light emission from the light source.

Optionally, the device comprises a NFC tag storing the information for establishing a wireless communication with the device. The NFC tag may be arranged in or on the housing of the device. The NFC tag may be configured to be electrically supplied and read by an external NFC reader in response to the external NFC reader being brought in the vicinity of the device.

In other words, the device may comprise the NFC tag in addition to the NFC interface. The optional NFC tag of the device allows obtaining the information for establishing a wireless communication with the device using a conventional NFC reader. This may be done, for example, when said information is to be obtained before installing the device and, thus, it is easy to bring the conventional NFC reader near the device and, thus, the optional NFC tag of the device. The above description with regard to the external NFC tag is correspondingly valid for the optional NFC tag of the device.

Optionally, the NFC tag is arranged in or on the housing at a same part of the housing, where the NFC interface is arranged in or on the housing.

That is, the above description with regard to arranging the NFC interface in or on the housing is correspondingly valid for arranging the optional NFC tag in or on the housing of the device.

Optionally, the device is a Matter smart home standard device.

That is, the device is a device according to the Matter smart home standard. In this case, the device may be referred to as Matter device. The Matter smart home standard is a well known connection standard for implementing smart home systems and internet of things (IoT) systems. The standard is directed to communication between devices, such as smart home and/or IoT devices. The standard may be abbreviated as "Matter".

Optionally, the device is a luminaire or lighting means.

The luminaire may be a suspension luminaire, a recessed luminaire (e.g. for being installed in a space between a ceiling and a suspended ceiling), a surface-mounted luminaire etc. Lighting means may be the component that is provided in a luminaire to provide a light source of the luminaire. The lighting means may be installed in the luminaire without the possibility of changing the lighting means or with the possibility to replace the lighting means in case the lighting means are defect. The lighting means may for example comprise one or more light emitting diodes (LEDs) as a light source. Lighting means comprising one or more LEDs that may be installed in sockets used for conventional lighting means, such as light bulbs, fluorescent lamps etc., may be referred to as retrofit LED lighting means. The lighting means may optionally be retrofit LED lighting means.

In order to achieve the building infrastructure device according to the first aspect of the present invention, some or all of the above-described optional features may be combined with each other.

According to a second aspect of the invention, a system is provided. The system comprises a building infrastructure device according to the first aspect, as described above, and a NFC tag. The NFC tag is configured to store the information that is wirelessly transmitted from the NFC interface of the device to the NFC tag in response to the NFC tag being brought in the vicinity of the device.

The above description with regard to the device of the first aspect is correspondingly valid for the building infrastructure device of the system of the second aspect. The description with regard to the external NFC tag described in the context of the description of the device of the first aspect is correspondingly valid for the NFC tag of the system of the second aspect.

Optionally, the system comprises a second device. The second device is configured to wirelessly obtain the information stored in the NFC tag, and establish a wireless communication with the device using the information wirelessly obtained from the NFC tag.

The second device may be referred to as "commissioning device" or "provisioning device". The second device may be a conventional commissioning device that is adapted to wirelessly obtain the information stored in the NFC tag. The second device may comprise an NFC reader unit for obtaining, e.g. reading, the information stored in the NFC tag.

The second device may be configured to integrate the device in a network using the established wireless communication with the device.

In other words, the second device is configured to commission the building infrastructure device. Thus, the second device is configured to make the device part of the network using the established wireless communication with the device. The network may be a network of a building or a part of the building. The network may be a communication network. The network may comprise multiple devices that are configured to communicate with each other according to a standard, such as the Matter standard. The network may comprise multiple building infrastructure devices.

The second device may be a mobile device. For example, the second device may be a smartphone, a tablet computer or a laptop computer.

The terms "laptop", "notebook computer" or "notebook" may be used as synonyms for the term "laptop computer". The term "tablet" may be used as a synonym for the term "tablet computer".

Optionally, the second device is configured to establish a Bluetooth communication with the device using the information wirelessly obtained from the NFC tag.

Optionally, the NFC tag is configured to be arranged or is arranged at the end of a rod. For example the NFC tag is configured to be arranged or is arranged at the end of a telescopic rod.

This allows easily and safely bringing the NFC tag in a vicinity of the housing of the building infrastructure device for allowing the information for establishing a wireless communication with the device from the NFC interface of the device to be transmitted to the NFC tag. A telescopic rod has parts that telescope. That is, the rod may be configured to variably change its length.

The above description with regard to the building infrastructure device according to the first aspect of the present invention is also valid for the system according to the second aspect. The description with regard to the system according to the second aspect is correspondingly valid for the building infrastructure device according to the first aspect.

The system according to the second aspect achieves the same advantages as the building infrastructure device according to the first aspect.

In order to achieve the system according to the second aspect of the present invention, some or all of the above-described optional features may be combined with each other.

According to a third aspect of the present invention, a method for commissioning a building infrastructure device according to the first aspect of the invention is provided. The method comprises bringing the NFC interface of the device in the mode by electrically supplying the device from an electrical energy supply. The method comprises storing the information for establishing the wireless communication with the device in the NFC tag by providing the NFC tag in the vicinity of the device. The method comprises wirelessly obtaining with a second device the information stored in the NFC tag by providing the NFC tag to a vicinity of the second device. The method comprises establishing, by the second device, the wireless communication with the device using the information wirelessly obtained from the NFC tag. The method comprises integrating, by the second device, the device in a network using the established wireless communication with the device.

Electrically supplying the device from an electrical energy supply may comprise electrically connecting the device to the electrical energy supply and/or activating the electrical energy supply. Providing the NFC tag to a vicinity of the second device may be achieved by placing or arranging the NFC tag near the second device or the second device near the NFC tag.

The above description with regard to the building infrastructure device according to the first aspect of the present invention and the description with regard to the system according to the second aspect of the present invention is also valid for the method according to the third aspect.

The method according to the third aspect achieves the same advantages as the building infrastructure device according to the first aspect.

In order to achieve the method according to the third aspect of the present invention, some or all of the above-described optional features may be combined with each other.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed figures (FIGs.), in which
- **FIG. 1**: schematically shows an example of a building infrastructure device according to an embodiment of the present invention, and an example of a system according to an embodiment of the present invention;
- **FIGs. 2 to 4**: each schematically shows an example of a building infrastructure device according to an embodiment of the present invention;
- **FIG. 5**: schematically shows an example of a system according to an embodiment of the present invention; and
- **FIG. 6**: shows an example of a method according to an embodiment of the present invention.

In the FIGs., corresponding elements have the same reference signs. The proportions and dimensions of the elements shown in the FIGs. do not represent the building infrastructure device, its components, the NFC tag and the second device to scale, but are merely chosen to describe the structure and function of the building infrastructure device, its components, the NFC tag and the second device, respectively.

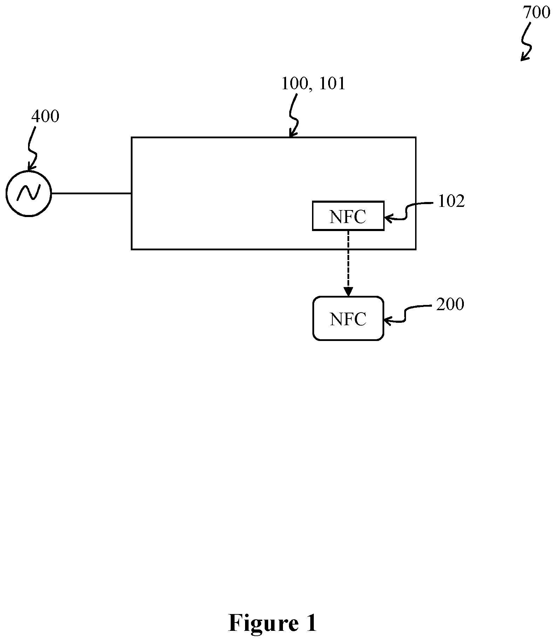

**FIG. 1** schematically shows an example of a building infrastructure device according to an embodiment of the present invention, and an example of a system according to an embodiment of the present invention. The building infrastructure device 100 of FIG. 1 is an example of the building infrastructure device according to the first aspect of the present invention. The description of the building infrastructure device according to the first aspect is correspondingly valid for the building infrastructure device 100 of FIG. 1. The system 700 of FIG. 1 is an example of the system according to the second aspect of the present invention. The description of the system according to the second aspect is correspondingly valid for the system 700 of FIG. 1.

The building infrastructure device 100 of FIG. 1 comprises a housing 101, and a near field communication (NFC) interface 102 arranged in or on the housing 102. According to FIG. 1, the NFC interface 102 is arranged in the housing 101. This is merely by way of example. The device 100 is configured to electrically supply the NFC interface 102 when the device 100 is electrically supplied from an electrical energy supply 400. For example, as shown in FIG. 1, the device 100 may be configured to electrically supply the NFC interface 102 when the device 100 is electrically connected to the electrical energy supply 400. The electrical energy supply 400 may be for example mains, as indicated in FIG. 1. For example, when a person, such as an electrician, installs the building infrastructure device 100 in a building at the desired location and connects the device 100 to the mains supply, the device 100 is configured to electrically supply the NFC interface 102. The NFC interface 102 is configured to be in a mode in response to being electrically supplied by the device 100. That is, as soon as the device 100 is electrically supplied, e.g. due to being electrically connected to mains supply, the NFC interface 102 may be in the mode. The electrical supply of the device may be different compared to the example described with regard to the device 100 of FIG. 1. For further information thereon, please refer to the corresponding description of the building infrastructure device of the first aspect.

In the mode, the NFC interface 102 is configured to wirelessly transmit to an external NFC tag 200 information in response to the external NFC tag 200 being brought in a vicinity of the device 100, the information being information for establishing a wireless communication with the device 100. The aforementioned transmission is indicated in FIG. 1 by a dashed arrow. As shown in FIG. 1, bringing the external NFC tag 200 in the vicinity of the device 100 means bringing the NFC tag 200 in the vicinity of the housing 101 of the device 1. Thus, by bringing the external NFC tag 200 within a distance of the housing 101 of the device 100 that allows NFC between the NFC interface 102 and the NFC tag 200 the NFC interface 102 may automatically provide the information for establishing a wireless communication with the device 100 to the NFC tag 200. For this the NFC interface 102 is in the mode, i.e. is electrically supplied by the device 100.

The building infrastructure device 100 of FIG. 1 may be a Matter smart home standard device.

As shown in FIG. 1, the building infrastructure device 100 and the NFC tag 200 may form a system 700, which is an example of the system according to the second aspect. Optionally, the NFC tag 200 may be configured to be arranged or may be arranged at the end of a rod (not shown in Figure 1). This allows easily and safely bringing the NFC tag 200 near the NFC interface 102 arranged in or on the housing 101 of the device 100, even when the device 100 is installed already e.g. at a high ceiling, so that the NFC interface 102 transmits the information for establishing a wireless communication with the device 100 to the NFC tag 200 that may store this information. The rod may be for example a telescopic rod. A conventional NFC reader (not shown in FIG. 1) may be used to obtain the aforementioned information from the NFC tag 200 after the NFC tag 200 has been brought in the vicinity of the housing 101 of the device 101 and, thus, has received from the NFC interface 102 of the device 100 the aforementioned information.

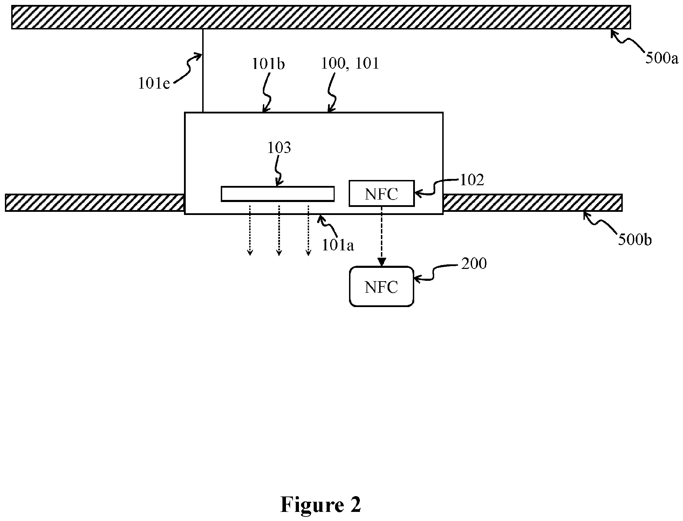

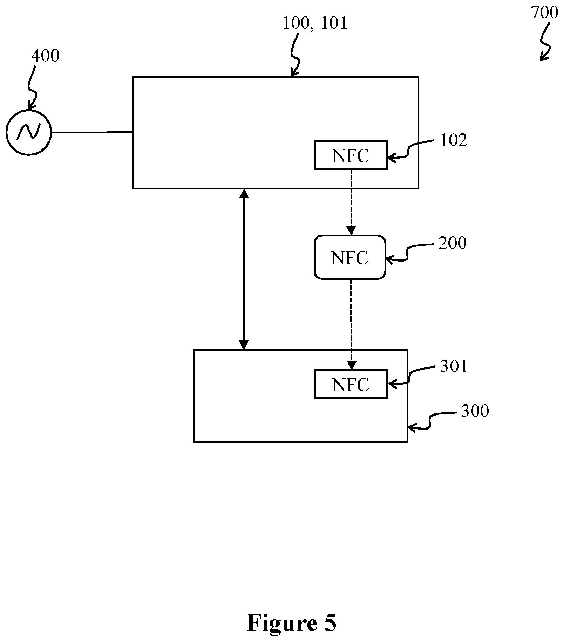

For further details on the building infrastructure device 100, e.g. optional features of the device 100, reference is made to the description of FIGs. 2 to 4 and the device according to the first aspect of the present invention. For further details on the system 700, e.g. optional features of the system 700, reference is made to the description of FIG. 5 and the system according to the second aspect of the present invention.

**FIGs. 2 to 4** each schematically shows an example of a building infrastructure device according to an embodiment of the present invention.

**FIG. 2** is an example of an optional implementation form of the building infrastructure device 100 of FIG. 1. The description of the building infrastructure device 100 of Figure 1 is correspondingly valid for the building infrastructure device 100 of FIG. 2 and in the following, mainly the optional features of the implementation form of FIG. 2 are described.

According to the example of FIG. 2, the building infrastructure device 100 is a recessed luminaire for being installed in a space between a ceiling 500a and a suspended ceiling 500b. The device 100 is not limited to this type of luminaire and, thus, may be a different luminaire type. The description of Figure 2 is correspondingly valid in case of the luminaire being a different luminaire type. As shown in FIG. 2, the device 100 comprises a light source 103 arranged in the housing 101 and configured to emit light via a light emitting surface 101a of the housing 101 (light emission is indicated by dotted arrows in FIG. 2). The NFC interface 102 may be arranged in or on the housing 102 (in the example of FIG. 2, the NFC interface 102 is arranged in the housing 101) such that the NFC interface 102 is closer to the light emitting surface 101a of the housing 101 than to a surface 101b of the housing 101 that is opposite to the light emitting surface 102a. In other words, the NFC interface 102 is arranged closer or in a vicinity of the light emitting surface 102a of the housing 101. This allows bringing the external NFC tag 200 close enough to the NFC interface 102 of the housing 101 for wireless communication from the NFC interface 102 to the NFC tag 200, even when the device 100 is already installed, e.g. as shown in FIG. 2. That is, the NFC interface 102 may be arranged in or on the housing 101 such that a distance between the NFC interface 102 and the NFC tag 200 is not too large when the NFC tag 200 is brought in a vicinity of the housing 101 of the device 100, i.e. brought close to the housing 101 of the device 100. This allows a NFC communication between the NFC interface 102 of the device 100 and the external NFC tag 200, even when the device 100 (e.g. being a luminaire) is installed already, e.g. at a high ceiling above ground.

In the example of Figure 2, the above-described arrangement of the NFC interface 102 allows the NFC interface 102 to be arranged in or on the housing 101 of the device 100 at a side of the housing 101 that is directed to the suspended ceiling 500b.

As shown in FIG. 2, the device 100 being a luminaire may be electrically connected, e.g. via at least one wire 101e, to an electrical energy supply, such as mains. The device 100 is configured to electrically supply the NFC interface 102 when the device 100 is electrically connected to the electrical energy supply. Thus, as soon as the device 100 is electrically supplied from the electrical energy supply, the NFC interface 102 switches to the mode and, thus, wirelessly transmits to the external NFC tag 200 information for establishing a wireless communication with the device 100 in response to the external NFC tag 200 being brought close to the housing 101 of the device 100. The building infrastructure device 100 is not limited to being a luminaire. It may be any other entity that comprises a light source for light emission. The description of FIG. 2 is then correspondingly valid.

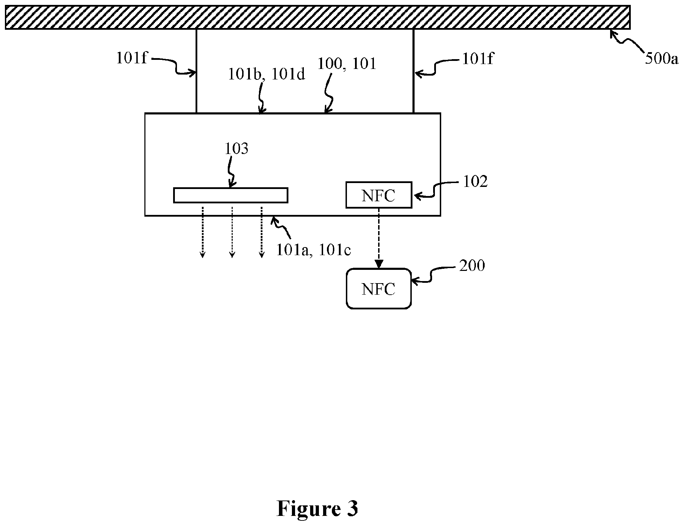

**FIG. 3** is an example of an optional implementation form of the building infrastructure device 100 of FIG. 1. The description of the building infrastructure device 100 of Figure 1 is correspondingly valid for the building infrastructure device 100 of FIG. 3 and in the following mainly the optional features of the implementation form of FIG. 3 are described.

According to the example of FIG. 3, the building infrastructure device 100 is a suspended luminaire for being installed at a ceiling 500a. The device 100 is not limited to this type of luminaire and, thus, may be a different luminaire type. The description of Figure 3 is correspondingly valid in case of the luminaire being a different luminaire type. As shown in FIG. 3, the device 100 comprises a light source 103 arranged in the housing 101 and configured to emit light via a light emitting surface 101a of the housing 101 (light emission is indicated by dotted arrows in FIG. 3). As shown in FIG. 3, a mounting part 101d of the housing 101 is configured to be mounted to the ceiling 500a. The NFC interface 102 may be arranged in or on the housing 101 at a part of the housing 101 that is different to the mounting part 101d of the housing 101. Especially, as shown in the example of FIG. 3, the NFC interface 102 may be arranged in or on the housing 101 at a part 101c of the housing 101 that is opposite to the mounting part 101d of the housing 101. As shown in FIG. 3, when the device 100 is a suspended luminaire, the part 101c of the housing 101 being opposite to the mounting part 101d of the housing 101 may be the light emitting surface 101a of the device 100. The description with regard to FIG. 2 may be correspondingly valid for the building infrastructure device 100 of FIG. 3.

This allows bringing the external NFC tag 200 close enough to the NFC interface 102 of the housing 101 for wireless communication from the NFC interface 102 to the NFC tag 200, even when the device 100 is already installed, e.g. as shown in FIG. 3. That is, the NFC interface 102 may be arranged in or on the housing 101 such that a distance between the NFC interface 102 and the NFC tag 200 is not too large when the NFC tag 200 is brought in a vicinity of the housing 101 of the device 100, i.e. brought close to the housing 101 of the device 100. This allows a NFC communication between the NFC interface 102 of the device 100 and the external NFC tag 200, even when the device 100 (e.g. being a luminaire) is installed already, e.g. at a high ceiling 500a above ground.

As shown in Figure 3, the device 100 being a suspended luminaire may be mounted at the mounting part 101d of the housing 101 via one or more mounting means, such as two mounting means 101f, to the ceiling 500a. The electrical supply of the luminaire 100 may be via one of the mounting means 101f, e.g. via a wire arranged at or inside the mounting means 101f. The building infrastructure device 100 is not limited to being a luminaire. Thus, the above description with regard to FIG. 3 is correspondingly valid in case the device 100 is a different type of building infrastructure device.

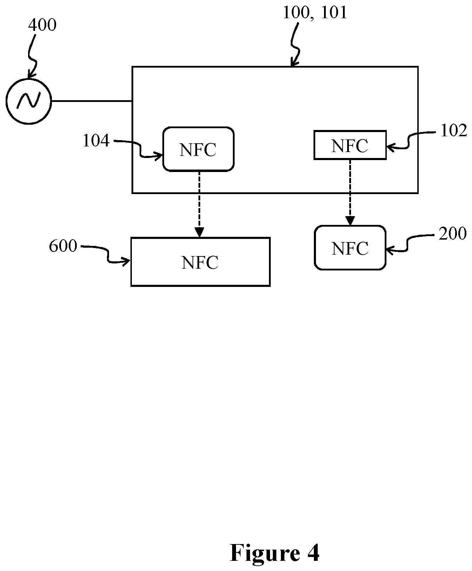

**FIG. 4** is an example of an optional implementation form of the building infrastructure device 100 of FIG. 1. The description of the building infrastructure device 100 of Figure 1 is correspondingly valid for the building infrastructure device 100 of FIG. 4 and in the following mainly the optional features of the implementation form of FIG. 4 are described.

As shown in FIG. 4, the device 100 may comprise a NFC tag 104 storing the information for establishing a wireless communication with the device 100. The NFC tag 104 may be arranged in or on the housing 101 of the device 100 (according to the example of FIG. 4 it is arranged in the housing 101). The NFC tag 104 may be configured to be electrically supplied and read by an external NFC reader 600 in response to the external NFC reader 600 being brought in the vicinity of the device 100.

In other words, the device may comprise the NFC tag 104 in addition to the NFC interface 102. The optional NFC tag 104 of the device allows obtaining the information for establishing a wireless communication with the device 100 using a conventional NFC reader 600.

The optional feature of the building infrastructure device 100 of FIG. 4 may be implemented in the building infrastructure device 100 of Figure 2 and in the building infrastructure device 100 of Figure 3.

For further information on the implementation form of the building infrastructure device 100 of Figure 4 reference is made to the corresponding description of the device according to the first aspect.

**FIG. 5** schematically shows an example of a system according to an embodiment of the present invention. **FIG. 5** is an example of an optional implementation form of the system 700 of FIG. 1. The description of the system 700 of Figure 1 is correspondingly valid for the system 700 of FIG. 5 and in the following mainly the optional features of the implementation form of FIG. 5 are described.

The NFC tag 200 of the system 700 of FIG. 5 is configured to store the information that is wirelessly transmitted from the NFC interface 102 of the device 100 to the NFC tag 200 in response to the NFC tag 200 being brought in the vicinity of the device 100, i.e. being brought near the housing 101 of the device 100 and, thus, near the NFC interface 102.

As shown in FIG. 5, the system may comprise besides the building infrastructure device 100 a second device 300. The second device 300 is configured to wirelessly obtain the information stored in the NFC tag 200 (indicated by the corresponding dashed arrow from the NFC tag 200 to the second device 300 in FIG. 5), and establish a wireless communication with the building infrastructure device 100 using the information wirelessly obtained from the NFC tag 200. This wireless communication is indicated in Figure 5 by the two-sided arrow between the device 100 and the second device 300. The wireless communication may be a Bluetooth communication.

The second device 300 may be referred to as "commissioning device" or "provisioning device". The second device 300 may be a conventional commissioning device that is adapted to wirelessly obtain the information stored in the NFC tag 200. As shown in Figure 5, the second device may comprise an NFC reader unit 301 for obtaining, e.g. reading, the information stored in the NFC tag 200.

The second device 300 (i.e. the commissioning device 300) may be configured to integrate the building infrastructure device 100 in a network using the established wireless communication with the building infrastructure device 100. In other words, the second device 300 is configured to commission the building infrastructure device 100.

The second device 300 may be a mobile device. For example, the second device 300 may be a smartphone, a tablet computer or a laptop computer.

For further details on the system 700 of FIG. 5 reference is made to the description of the system according to the second aspect of the present invention.

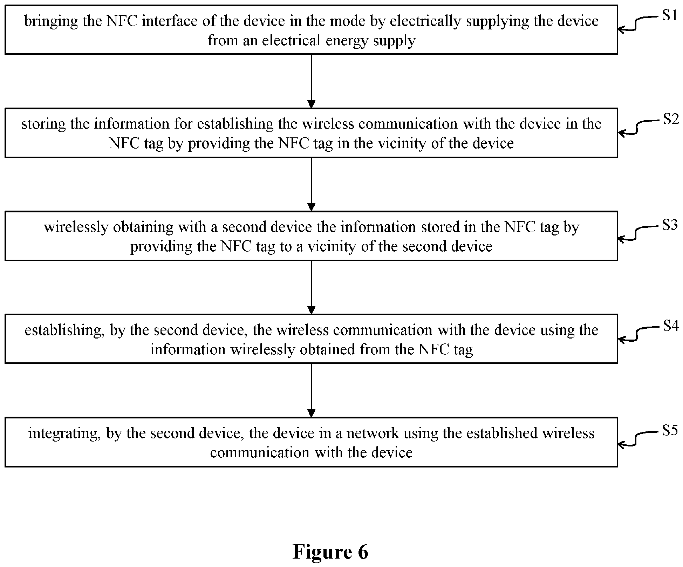

**FIG. 6** shows an example of a method according to an embodiment of the present invention. The method of FIG. 6 is an example of the method according to the third aspect of the present invention. The description of the method according to the third aspect is correspondingly valid for the method of FIG. 6.

In the following description of the method of FIG. 6, the reference signs used for the different elements in Figures 1 to 5 are used. The method of Figure 6 is a method for commissioning a building infrastructure device 100. The building infrastructure device 100 may be the building infrastructure device 100 of any one of Figures 1 to 4. As shown in FIG. 6, the method comprises a step S1 of bringing the NFC interface 102 of the building infrastructure device 100 in the mode by electrically supplying the building infrastructure device 100 from an electrical energy supply 400. Namely, this allows the device 100 to electrically supply the NFC interface 102 triggering the mode of the NFC interface 102.

The method comprises a second step S2 of storing the information for establishing the wireless communication with the device 100 in the NFC tag 200 by providing the NFC tag 200 in the vicinity of the device 100. Namely, since the NFC interface 102 of the device 100 is in the mode as a result of being electrically supplied by the device 100, the NFC interface 102 automatically transmits the aforementioned information to the NFC tag 200 in response to the NFC tag 200 being brought close to the housing 101 and, thus, to the NFC interface 102 of the device 100.

The method comprises a third step S3 of wirelessly obtaining with a second device 300 the information stored in the NFC tag 200 by providing the NFC tag 200 to a vicinity of the second device 300. This allows the second device 300 to establish a wireless communication, such as a Bluetooth communication, with the building infrastructure device 100 using the information for establishing such a wireless communication obtained via the NFC tag 200 from the building infrastructure device 100. Since not the second device 300 but the NFC tag 200 has been brought close to the housing 101 of the building infrastructure device 100 for obtaining the aforementioned information from the building infrastructure device 100, the method for commissioning is easy and safe, even in case the building infrastructure device 100 is already installed e.g. at a high ceiling. Namely, the NFC tag 200 does not need to be electrically powered, may be of smaller size compared to the second device 300 and does not need to be operated by a person for wirelessly obtaining information from the NFC interface 102 of the building infrastructure device 100. Therefore, the NFC tag 200 may be arranged at the end of a rod and be brought in a vicinity of the building infrastructure device 100, i.e. close to the NFC interface 102 of the building infrastructure device 100, using the rod. Once the information transmitted from the NFC interface 102 of the building infrastructure device 100 is stored in the NFC tag 200, the NFC tag 200 and the second device 300 may be arranged close to each other allowing the aforementioned information to be provided from the NFC tag 200 to the second device 300. The second device 200 then may use this information for commissioning of the building infrastructure device 100, e.g. for establishing a wireless communication with the building infrastructure device 100.

The method comprises a fourth step S4 of establishing, by the second device 300, the wireless communication with the building infrastructure device 100 using the information wirelessly obtained from the NFC tag 200. The method comprises a fifth step S5 of integrating, by the second device 300, the building infrastructure device 100 in a network using the established wireless communication with the building infrastructure device 100. Thus, the method of Figure 6 allows easily and safely commissioning the building infrastructure device 100.

For example, the method of Figure 6may be performed using the elements of the system 700 of FIG. 5.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A building infrastructure device (100), comprising
- a housing (101), and
- a near field communication, NFC, interface (102) arranged in or on the housing (101), wherein
- the device (100) is configured to electrically supply the NFC interface (102) when the device (100) is electrically supplied from an electrical energy supply (400),
- the NFC interface (102) is configured to be in a mode in response to being electrically supplied by the device (100), and
- in the mode the NFC interface (102) is configured to wirelessly transmit to an external NFC tag information (200) in response to the external NFC tag (200) being brought in a vicinity of the device (100), the information being information for establishing a wireless communication with the device (100).

2. The device (100) according to claim 1, wherein
- a mounting part (101d) of the housing (101) is configured to be mounted to an entity (500a), optionally a wall or ceiling, and
- the NFC interface (102) is arranged in or on the housing (101) at a part (101c) of the housing (101) that is different to the mounting part (101d) of the housing (101).

3. The device (100) according to claim 2, wherein
- the NFC interface (102) is arranged in or on the housing (101) at a part (101c) of the housing (101) that is opposite to the mounting part (101d) of the housing (101).

4. The device (100) according to any one of the previous claims, wherein
- the device (100) comprises a light source (103) arranged in the housing (101) and configured to emit light via a light emitting surface (101a) of the housing (101), and
- the NFC interface (102) is arranged in or on the housing (101) such that the NFC interface (102) is closer to the light emitting surface (101a) of the housing than to a surface (101b) of the housing (101) that is opposite to the light emitting surface (101a).

5. The device (100) according to any one of the previous claims, wherein
- the device (100) comprises a NFC tag (104) storing the information for establishing a wireless communication with the device (100),
- the NFC tag (104) is arranged in or on the housing (101) of the device (100), and
- the NFC tag (104) is configured to be electrically supplied and read by an external NFC reader (600) in response to the external NFC reader (600) being brought in the vicinity of the device (100).

6. The device (100) according to claim 5, wherein
- the NFC tag (104) is arranged in or on the housing (101) at a same part of the housing (101), where the NFC interface (102) is arranged in or on the housing (101).

7. The device (100) according to any one of the previous claims, wherein
- the device (100) is a Matter smart home standard device.

8. The device (100) according to any one of the previous claims, wherein
- the device (100)is a luminaire or lighting means.

9. A system (700) comprising,
- a building infrastructure device (100) according to any one of claims 1 to 8,
- a NFC tag (200); wherein
- the NFC tag (200) is configured to store the information that is wirelessly transmitted from the NFC interface (102) of the device (100) to the NFC tag (200) in response to the NFC tag (200) being brought in the vicinity of the device (100).

10. The system (700) according to claim 9, wherein
- the system (700) comprises a second device (300), and
- the second device (300) is configured to
- wirelessly obtain the information stored in the NFC tag (200), and
- establish a wireless communication with the device (100) using the information wirelessly obtained from the NFC tag (200).

11. The system (700) according to claim 10, wherein
- the second device (300) is configured to integrate the device (100) in a network using the established wireless communication with the device (100).

12. The system (700) according to claim 10 or 11, wherein
- the second device (300) is a mobile device, such as a smartphone, a tablet computer or a laptop computer.

13. The system (700) according to any one of claims 10 to 12, wherein
- the second device (300) is configured to establish a Bluetooth communication with the device (100) using the information wirelessly obtained from the NFC tag (200).

14. The system (700) according to any one of claims 9 to 13, wherein
- the NFC tag (200) is configured to be arranged or is arranged at the end of a rod, such as a telescopic rod.

15. A method for commissioning a building infrastructure device (100) according to any one of claims 1 to 8, the method comprises
- bringing (S1) the NFC interface of the device in the mode by electrically supplying the device from an electrical energy supply,
- storing (S2) the information for establishing the wireless communication with the device in the NFC tag by providing the NFC tag in the vicinity of the device,
- wirelessly obtaining (S3) with a second device the information stored in the NFC tag by providing the NFC tag to a vicinity of the second device,
- establishing (S4), by the second device, the wireless communication with the device using the information wirelessly obtained from the NFC tag, and
- integrating (S5), by the second device, the device in a network using the established wireless communication with the device.
